# DEMANDE DE BREVET EUROPEEN

(11) **EP 3 835 715 A1**
(43) Date de publication de la demande: **16.06.2021**
(21) Numéro de dépôt: 20212967.2
(22) Date de dépôt: 10.12.2020
(51) Int. Cl.: G01B 7/02, G01B 7/04, G01B 11/02, G01B 11/04, B65H 61/00, B65H 16/00, F41G 7/32, F42B 15/04, F42B 19/01

(54) **SYSTÈME DE DÉTERMINATION DE LA DISTANCE PARCOURUE PAR UN VÉHICULE SOUS-MARIN LANCÉ À PARTIR D'UN ENGIN SOUS-MARIN**

(30) Priorité: 11.12.2019 FR 1914124
(71) Demandeur: Naval Group, 75015 Paris (FR)
(72) Inventeur: THIRIOT, André, 83997 SAINT TROPEZ CEDEX (FR)
(74) Mandataire: Lavoix

(57) **Abrégé**

Ce système de détermination de la distance parcourue par un véhicule sous-marin lancé à partir d'un engin sous-marin et raccordé à celui-ci par des moyens de transmission d'informations dont au moins une portion est logée dans une gaine de protection (2), les moyens de transmission et la gaine étant lovés sous la forme d'une bobine de spires creuse (3) se dévidant lors du déplacement du véhicule sous-marin, est caractérisé en ce qu'il comporte des moyens (4, 5) de détermination de la longueur de gaine délovée pour déterminer la distance parcourue par le véhicule sous-marin.

## Description

La présente invention concerne un système de détermination de la distance parcourue par un véhicule sous-marin lancé à partir d'un engin sous-marin.

Un tel système de détermination trouve des applications par exemple pour déterminer la distance parcourue par une arme telle qu'une torpille, lancée à partir d'un sous-marin proprement dit.

On sait que d'une façon générale, une torpille de cette nature est lancée à partir d'un tube lance-torpille du sous-marin et peut être raccordée au moins dans un premier temps de son déplacement, au reste des circuits du sous-marin par l'intermédiaire de moyens de transmission d'informations.

Ces moyens de transmission d'informations permettent par exemple d'échanger des informations entre le sous-marin et la torpille afin d'assurer un guidage de cette torpille.

Ces moyens de transmission d'informations peuvent par exemple comporter au moins une fibre optique.

Bien entendu d'autres types de moyens de transmission peuvent être envisagés.

Au moins une partie de cette fibre optique est alors logée dans une gaine de protection.

Ceci permet d'éviter toute dégradation de cette fibre contre des parties du sous-marin.

Cette fibre et la gaine sont en effet lovées sous la forme d'une bobine de spires creuse par exemple dans un boitier disposé dans un tube lance arme de l'engin sous-marin, cette bobine de spires c'est-à-dire la fibre et la gaine, se dévidant lors du déplacement du véhicule sous-marin, depuis l'engin sous-marin.

On sait qu'aujourd'hui la détection de la sortie de la torpille, du tube, est basée par exemple sur l'utilisation d'un contact libéré lors de la sortie du tube de lancement, ce contact étant couplé à un vélocimètre.

Mais il reste très difficile d'obtenir une information de distance parcourue par le véhicule, corrélée au déplacement du véhicule sous-marin par rapport à l'engin sous-marin.

De plus il n'est aujourd'hui pas possible de détecter que la torpille à également quitter un avant-tube de certains sous-marins.

Le but de l'invention est donc de résoudre ces problèmes.

A cet effet l'invention a pour objet un système de détermination de la distance parcourue par un véhicule sous-marin lancé à partir d'un engin sous-marin et raccordé à celui-ci par des moyens de transmission d'informations dont au moins une portion est logée dans une gaine de protection, les moyens de transmission et la gaine étant lovés sous la forme d'une bobine de spires creuse se dévidant lors du déplacement du véhicule sous-marin, caractérisé en ce qu'il comporte des moyens de détermination de la longueur de gaine délovée pour déterminer la distance parcourue par le véhicule sous-marin.

Suivant d'autres caractéristiques du système selon l'invention, prises seules ou en combinaison :
- les moyens de détermination comprennent des moyens à photo-capteur à réflexion lumineuse activés par la gaine lors du délovage de chaque spire ;
- les moyens de détermination comprennent des moyens à barrière lumineuse coupée par la gaine lors du délovage de chaque spire ;
- les moyens de détermination comprennent des moyens à capteur inductif activés par la gaine lors du délovage de chaque spire ;
- les moyens de détermination comprennent des capteurs de délovage de certaines spires de la bobine ;
- les capteurs de délovage comprennent un capteur de détection du délovage de la première spire de la gaine pour détecter le début du déplacement du véhicule ;
- les capteurs de délovage comprennent au moins un capteur pour détecter le délovage d'une spire prédéterminée de la gaine pour détecter le franchissement d'une distance prédéterminée par le véhicule ;
- les capteurs de délovage comprennent un capteur de détection du délovage de la dernière spire de la gaine pour détecter la fin du délovage de la gaine ;
- les capteurs comprennent chacun un interrupteur à changement d'état commandé par la libération d'une épinglette entraînée par la gaine lors de son délovage ;
- le véhicule sous-marin est une torpille, les moyens de transmission d'informations comprennent au moins une fibre optique et l'engin sous-marin est un sous-marin proprement dit.

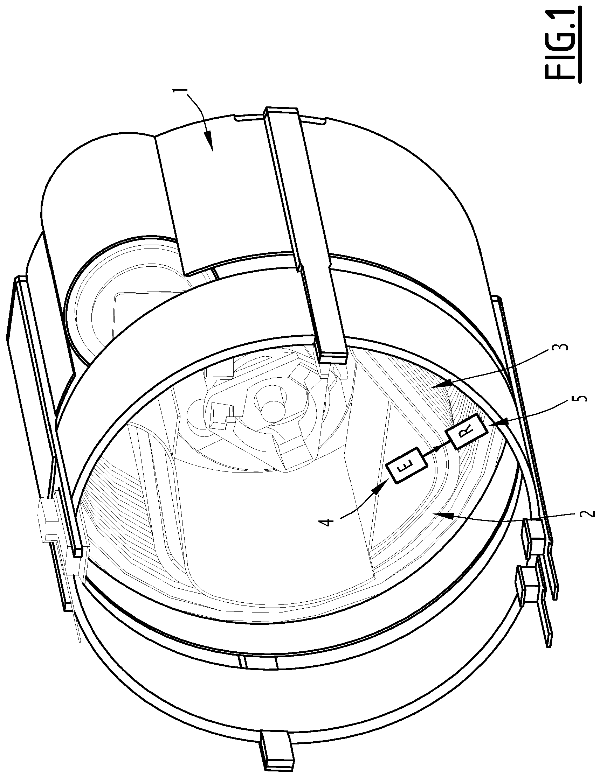

L'invention sera mieux comprise à la lecture de la description qui va suivre, donnée uniquement à titre d'exemple, et faite en se référant aux dessins annexés, sur lesquels les figures 1, 2, 3 et 4 représentent des vues schématiques en perspective et en coupe d'une partie arrière d'un véhicule sous-marin tel qu'une torpille, illustrant quatre exemples de réalisation d'un système de détermination selon l'invention.

On a en effet illustré sur ces figures, plusieurs exemples de réalisation d'un système de détermination de la distance parcourue par un véhicule sous-marin lancé à partir d'un engin sous-marin.

Sur ces figures, l'engin sous-marin qui peut par exemple être constitué par un sous-marin proprement dit, est désigné par la référence générale 1 sur ces figures.

Le véhicule sous-marin n'est quant à lui pas représenté et peut par exemple être constitué par une torpille lancée à partir du sous-marin.

Comme cela a été indiqué précédemment, la torpille et le sous-marin sont raccordés par des moyens de transmission d'informations.

Ces moyens de transmission d'informations comprennent par exemple au moins une fibre optique.

Au moins une portion de cette fibre optique est logée dans une gaine de protection de façon classique, cette gaine étant désignée par la référence générale 2 sur ces figures.

Comme cela est également illustré sur ces figures, ces moyens de transmission d'informations et la gaine de protection de ceux-ci, sont lovés sous la forme d'une bobine de spires désignée par la référence générale 3 sur ces différentes figures.

Cette bobine de spires se dévide alors lors du déplacement du véhicule sous-marin comme cela est illustré.

Dans le système selon l'invention, il est prévu des moyens de détermination de la longueur de gaine délovée pour déterminer la distance parcourue par le véhicule sous-marin.

Différents modes de réalisation possibles de ces moyens de détermination de la longueur de la gaine délovée peuvent être envisagés.

Ainsi par exemple sur la figure 1, on a illustré l'utilisation de moyens à barrière lumineuse coupée par les moyens de transmission lors du délovage de chaque spire.

Sur la figure 1, la barrière est alors formée entre un émetteur de faisceau lumineux désigné par la référence générale 4 et un récepteur correspondant désigné par la référence générale 5, le faisceau lumineux étant coupé par les moyens de transmission lors du délovage de chaque spire.

Bien entendu d'autres modes de réalisation de ces moyens de détermination peuvent être envisagés.

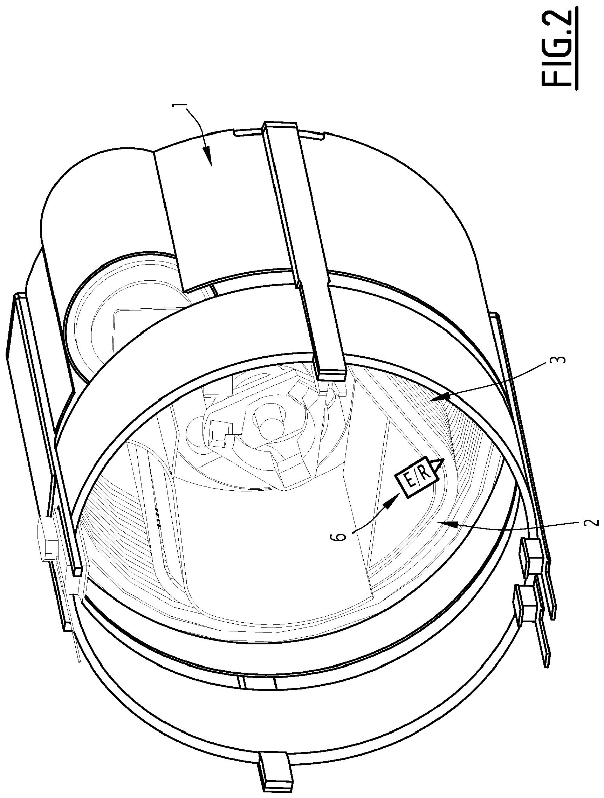

Ainsi par exemple sur la figure 2, on a illustré l'utilisation de moyens à photo-capteur à réflexion lumineuse activés par les moyens de transmission lors du délovage de chaque spire.

Ces moyens à photo-capteur sont désignés par la référence générale 6 sur cette figure 2.

Bien entendu d'autres modes de réalisation encore de ces moyens de détermination peuvent être envisagés.

Ainsi par exemple des moyens à capteur inductif activés par les moyens de transmission lors du délovage de chaque spire, peuvent être envisagés si la gaine est par exemple métallique.

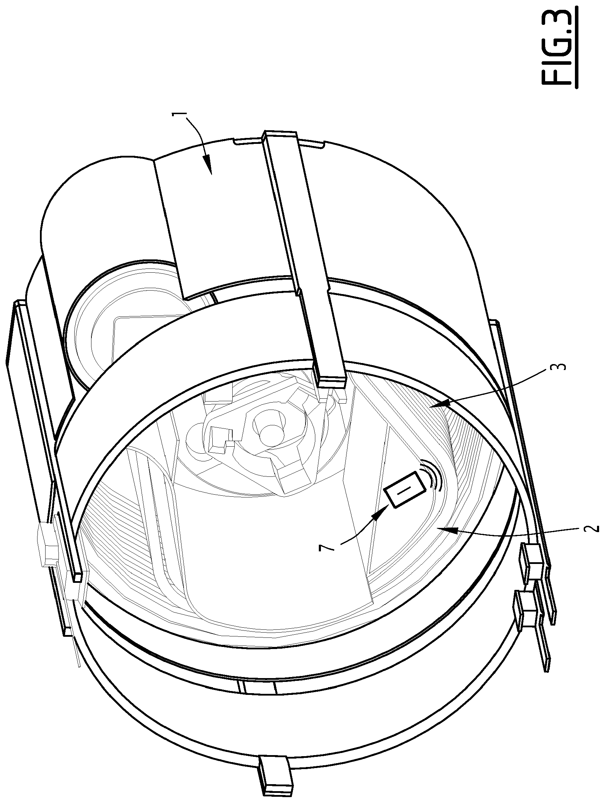

Ceci est par exemple illustré sur la figure 3, dans laquelle le capteur inductif est désigné par la référence 7.

D'autres modes de réalisation encore de ceux-ci peuvent être envisagés comme par exemple l'utilisation de capteurs de délovage de certaines spires de la bobine.

Ainsi par exemple la bobine et les spires peuvent être associées à des capteurs tels que par exemple des interrupteurs, permettant de détecter le délovage de la bobine.

Ainsi par exemple le système peut comporter un capteur associé à la première spire de la gaine, pour détecter le début du déplacement du véhicule sous-marin.

Le système peut également comporter au moins un capteur pour détecter le délovage d'une spire prédéterminée de la gaine, pour détecter le franchissement d'une distance prédéterminée par le véhicule et par exemple un autre capteur de détection du délovage de la dernière spire de la gaine pour détecter la fin du délovage de cette gaine.

A titre d'exemple, ces capteurs peuvent comporter chacun un interrupteur à changement d'état commandé par la libération d'une épinglette entrainée par la gaine lors de son délovage.

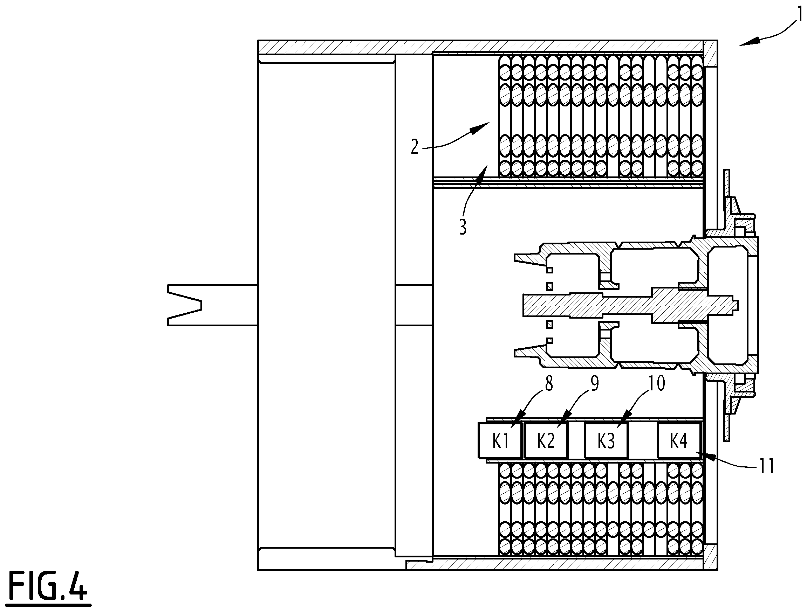

Un exemple de réalisation de ce type de structure est illustré sur la figure 4.

Sur cette figure quatre dispositifs à épinglette et interrupteur sont représentés et désignés par les références 8, 9, 10 et 11. Ceux-ci sont associés à des spires déterminées de la bobine.

Le principe de fonctionnement de ce système repose alors sur la détection et le comptage du passage d'une spire de la gaine en cours de délovage.

La longueur d'une spire de gaine étant connue ou pouvant être déterminée avec une précision connue, il est alors possible de calculer la distance parcourue par le véhicule par comptage du nombre de spires délovées.

On conçoit alors qu'un tel système présente un certain nombre d'avantages notamment au niveau de la possibilité de déterminer par exemple si une torpille a quitté le tube voire l'avant-tube dans certain sous-marins.

## Revendications

1. Système de détermination de la distance parcourue par un véhicule sous-marin lancé à partir d'un engin sous-marin et raccordé à celui-ci par des moyens de transmission d'informations dont au moins une portion est logée dans une gaine de protection (2), les moyens de transmission et la gaine étant lovés sous la forme d'une bobine de spires creuse (3) se dévidant lors du déplacement du véhicule sous-marin, **caractérisé en ce qu'**il comporte des moyens (4, 5 ; 6 ; 7 ; 8, 9, 10, 11) de détermination de la longueur de gaine délovée pour déterminer la distance parcourue par le véhicule sous-marin.

2. Système de détermination de la distance parcourue par un véhicule sous-marins lancé à partir d'un engin sous-marin selon la revendication 1, **caractérisé en ce que** les moyens de détermination comprennent des moyens à photo-capteur à réflexion lumineuse (6) activés par la gaine lors du délovage de chaque spire.

3. Système de détermination de la distance parcourue par un véhicule sous-marins lancé à partir d'un engin sous-marin selon la revendication 1, **caractérisé en ce que** les moyens de détermination comprennent des moyens à barrière lumineuse (4, 5) coupée par la gaine lors du délovage de chaque spire.

4. Système de détermination de la distance parcourue par un véhicule sous-marins lancé à partir d'un engin sous-marin selon la revendication 1, **caractérisé en ce que** les moyens de détermination comprennent des moyens à capteur inductif (7) activés par la gaine lors du délovage de chaque spire.

5. Système d de détermination de la distance parcourue par un véhicule sous-marins lancé à partir d'un engin sous-marin selon la revendication 1, **caractérisé en ce que** les moyens de détermination comprennent des capteurs de délovage (8, 9, 10, 11) de certaines spires de la bobine (3).

6. Système de détermination de la distance parcourue par un véhicule sous-marins lancé à partir d'un engin sous-marin selon la revendication 5, **caractérisé en ce que** les capteurs de délovage (8, 9, 10, 11) comprennent un capteur de détection du délovage de la première spire de la gaine pour détecter le début du déplacement du véhicule.

7. Système de détermination de la distance parcourue par un véhicule sous-marins lancé à partir d'un engin sous-marin selon la revendication 5 ou 6, **caractérisé en ce que** les capteurs de délovage (8, 9, 10, 11) comprennent au moins un capteur pour détecter le délovage d'une spire prédéterminée de la gaine pour détecter le franchissement d'une distance prédéterminée par le véhicule.

8. Système de détermination de la distance parcourue par un véhicule sous-marins lancé à partir d'un engin sous-marin selon la revendication 5, 6 ou 7, **caractérisé en ce que** les capteurs de délovage comprennent un capteur de détection (8, 9, 10, 11) du délovage de la dernière spire de la gaine pour détecter la fin du délovage de la gaine.

9. Système de détermination de la distance parcourue par un véhicule sous-marins lancé à partir d'un engin sous-marin selon la revendication 5, 6, 7 ou 8, **caractérisé en ce que** les capteurs (8, 9, 10, 11) comprennent chacun un interrupteur à changement d'état commandé par la libération d'une épinglette entraînée par la gaine lors de son délovage.

10. Système de détermination de la distance parcourue par un véhicule sous-marins lancé à partir d'un engin sous-marin selon l'une quelconque des revendications précédentes, **caractérisé en ce que** le véhicule sous-marin est une torpille, les moyens de transmission d'informations (2) comprennent au moins une fibre optique et l'engin sous-marin est un sous-marin proprement dit.
